# EUROPÄISCHE PATENTSCHRIFT

(11) **EP 1 759 116 B1**
(45) Veröffentlichungstag und Bekanntmachung des Hinweises auf die Patenterteilung: **13.02.2008**
(21) Anmeldenummer: 05747198.9
(22) Anmeldetag: 06.06.2005
(51) Int. Cl.: F03G 6/00

(54) **WÄRMEKRAFTMASCHINE**
HEAT ENGINE
MACHINE THERMIQUE

(30) Priorität: 08.06.2004 AT 9952004
(43) Veröffentlichungstag der Anmeldung: 07.03.2007
(73) Patentinhaber: International Innovations Limited, Sydney NSW 2000 (AU)
(72) Erfinder: HARGREAVES, Steve, Broadbeach QLD 4218 (AU); JEGEL, Franz, Peter, A-4407 Steyr-Gleink (AT); PFEIFER, Bernd, Peter, A-8054 Graz (AT)
(74) Vertreter: Babeluk, Michael
(86) Internationale Anmeldenummer: PCT/AT2005/000194
(87) Internationale Veröffentlichungsnummer: WO 2005/121551

(56) Entgegenhaltungen:
- WO-A-02/075154
- DE-A1- 19 713 345
- FR-A- 2 501 302
- US-A- 4 202 178
- RHEINLAENDER J ET AL: "GUD-KRAFTWERK MIT INTEGRIERTEM SOLARSYSTEM" BWK BRENNSTOFF WARME KRAFT, SPRINGER VDI VERLAG, DUSSELDORF, DE, Bd. 53, Nr. 6, Juni 2001 (2001-06), Seiten 55-58, XP001065946 ISSN: 1618-193X

## Beschreibung

Die Erfindung betrifft eine Wärmekraftmaschine gemäß dem Oberbegriff von Patentanspruch 1.

Es ist bekannt, dass sich durch Ausnutzung von natürlich vorkommenden Temperaturdifferenzen mechanische Arbeit gewinnen lässt. So kann beispielsweise die Wärme aus Solaranlagen oder aus Erdwärmetauschern zu diesem Zweck herangezogen werden.

Aus der US 5,259,363 A ist eine Solaranlage für Gebäude bekannt, die neben der Gewinnung von Wärme zur Beheizung eine Turbine zur Gewinnung von elektrischem Strom aufweist. Die Turbine ist Teil eines herkömmlichen Kreisprozesses, bei dem ein Arbeitsfluid verdampft wird, indem Wärme zugeführt wird, danach in der Turbine entspannt wird, kondensiert wird und von einer Speisepumpe wieder auf den Arbeitsdruck gebracht wird. Eine solche Anlage ist unter optimalen Bedingungen durchaus effizient, ist aber relativ wenig flexibel, wenn die Umweltbedingungen schwankend und suboptimal sind.

Die WO 02/075154 A zeigt eine Vorrichtung zum Verdichten eines Gases durch Sonnenenergie und/oder Umgebungswärme. Bei dieser Vorrichtung werden Hochdruckwärmetauscher verwendet, die gleichzeitig als Kollektoren zum Wärmeaustausch mit der Umgebung konzipiert sind. So kann beispielsweise ein Hochdruckwärmetauscher als Solarkollektor ausgebildet sein. Ein Pneumatikzylinder ist als Arbeitsmaschine dazu vorgesehen, ein Hochdruckmedium aus dem Hochdruckteil des Hochdruckwärmetauschers zu entspannen. Nach Herstellung des Druckausgleichs wird das abgearbeitete Arbeitsmedium im Hochdruckteil des Hochdruckwärmetauschers ergänzt, um einen neuen Arbeitszyklus beginnen zu können. Mit einer bekannten Vorrichtung dieser Art ist es möglich, Wärme, Kälte und mechanische Energie gleichzeitig zu nutzen bzw. herzustellen, der Wirkungsgrad der Prozesse ist jedoch bescheiden, und auch die Flexibilität im Hinblich auf die mögliche Anpassung an unterschiedliche Anforderungen und Umweltbedingungen ist beschränkt. Ein weiterer Nachteil der bekannten Lösung besteht darin, dass die Kollektoren, die als Umgebungswärmetauscher dienen, gleichzeitig als Hochdruckbehälter ausgebildet sind und daher mechanisch sehr robust ausgebildet sein müssen. Dies erhöht den konstruktiven Aufwand beträchtlich.

Die CH 647 590 A beschreibt ein Verfahren und eine Vorrichtung zur Gewinnung brauchbarer Energie von niedriggradigen Wärmequellen. Diese Vorrichtung kann in bestimmten Ausführungsvarianten Hochdruckbehälter besitzen, die mit einem Molekularsieb Zeolith gefüllt sind.

Die FR 2 501 302 A zeigt eine solarbetriebene Pumpe, die US 5,259,363 A eine in einem Gebäudedach integrierte Solaranlage und die US 4,202,178 A eine Solaranlage als Wärmekraftmaschine. Keine der bekannte Lösungen kann die obigen Anforderungen in zufriedenstellender Weise erfüllen.

Aufgabe der vorliegenden Erfindung ist es, eine Wärmekraftmaschine der oben beschriebenen Art anzugeben, die diese Nachteile vermeidet und die die zur Verfügung stehenden Temperaturniveaus optimal ausnutzt und einen hohen Wirkungsgrad aufweist. Im weiteren soll ein einfacher konstruktiver Aufbau erreicht werden. Eine weitere Aufgabe der Erfindung ist es, ein Verfahren anzugeben, das hohe Wirkungsgrade und eine große Flexibilität ermöglicht.

Erfindungsgemäß werden diese Aufgaben durch die Merkmale von Patentanspruch 1 gelöst. Auf diese Weise ist es möglich, ein Arbeitsmedium auf hohen Druck zu bringen, um dieses zu speichern oder nach Bedarf abzuarbeiten.

Wesentlich an der Erfindung ist einerseits, dass ein Arbeitsmedium zur Umsetzung der thermischen Energie eingesetzt wird, das unter hohem Druck steht, um hohe Wirkungsgrade zu erreichen. Andererseits kann jedoch durch die räumliche Trennung der Kollektoren, d.h. der Umgebungswärmetauscher, ein wesentlich schnellerer Arbeitszyklus realisiert werden, da direkt zwischen Erwärmung und Abkühlung umgeschalten werden kann. Ein weiterer Vorteil des erfindungsgemäßen Systems besteht in der Tatsache, dass keine Speisepumpe erforderlich ist, um die Hochdruckbehälter mit dem Arbeitsmedium zu befüllen, da diese im Wesentlichen zwischen den Hochdruckbehältern hin und her strömt. Da die Umgebungswärmetauscher nur mit einem Niederdruckmedium durchströmt sind, können handelsübliche Sonnenkollektoren, Erdwärmetauscher oder dgl. verwendet werden, was den konstruktiven Aufbau vereinfacht und die Kosten senkt.

Ein besonderer Vorteil der vorliegenden Erfindung besteht darin, dass durch die Trennung der Komponenten eine große Flexibilität hinsichtlich der Ausnutzung der aktuell zur Verfügung stehenden Temperaturniveaus möglich ist.

Eine konstruktiv besonders günstige Lösung der Erfindung ist gegeben, wenn die Arbeitsmaschine als Turbine ausgebildet ist. Die Arbeitsmaschine kann umsteuerbar, d.h. in beide Richtungen betreibbar ausgeführt sein, wodurch sich der schaltungstechnische Aufwand verringert.

Eine Steigerung des Wirkungsgrads kann dadurch erreicht werden, dass der erste Hochdruckbehälter neben dem ersten Wärmetauscher einen fünften Wärmetauscher aufweist, und dass der zweite Hochdruckbehälter neben dem zweiten Wärmetauscher einen sechsten Wärmetauscher aufweist. Insbesondere vorteilhaft ist es in diesem Zusammenhang, wenn der erste Umgebungswärmetauscher wahlweise mit dem fünften und dem sechsten Wärmetauscher verbindbar ist und dass der zweite Umgebungswärmetauscher wahlweise mit dem ersten und dem zweiten Wärmetauscher verbindbar ist. Die Schaltung wird dabei bevorzugterweise so ausgeführt, dass der erste Umgebungswärmetauscher mit dem fünften und dem sechsten Wärmetauscher in einem geschlossenen Wärmeträgerkreislauf angeordnet ist und dass der zweite Umgebungswärmetauscher mit dem ersten und dem zweiten Wärmetauscher in einem weiteren geschlossenen Wärmeträgerkreislauf angeordnet ist. Der erste und der zweite Wärmetauscher dienen dabei im Normalbetrieb dazu, abwechselnd dem ersten und dem zweiten Hochdruckbehälter Wärme zuzuführen, während dem anderen der beiden Hochdruckbehälter über den fünften bzw. sechsten Wärmetauscher Wärme entzogen wird. Es ist jedoch festzuhalten, dass unter besonderen Betriebsbedingungen, beispielsweise in der Nacht, über einen Umgebungswärmetauscher, der normalerweise zur Aufnahme von Wärme dient, wie etwa einen Solarkollektor, Wärme abgegeben werden kann, während über einen anderen Umgebungswärmetauscher, der beispielsweise als Erdwärmetauscher ausgebildet ist, Wärme aufgenommen wird. Durch die besondere Flexibilität der erfindungsgemäßen Vorrichtung können auch solche ungewöhnlichen Umweltbedingungen ausgenützt werden, um Wärme in mechanische Arbeit umzuwandeln. Es ist insbesondere auch möglich, einen Umgebungswärmetauscher zur Beheizung oder Kühlung von Gebäuden oder Anlagen zu verwenden.

Die Flexibilität im Einsatz kann dadurch gesteigert werden, dass im weiteren ein dritter Hochdruckbehälter und ein vierter Hochdruckbehälter vorgesehen sind, die wahlweise mit der Arbeitsmaschine verbindbar sind. Die Wärmezufuhr und Wärmeabfuhr erfolgt dabei in bevorzugter Weise dadurch, der dritte Hochdruckbehälter einen dritten Wärmetauscher aufweist und dass der vierte Hochdruckbehälter einen vierten Wärmetauscher aufweist.

Eine besonders begünstigte Ausführungsvariante der vorliegenden Erfindung sieht vor, dass der dritte Wärmetauscher und der vierte Wärmetauscher wahlweise mit dem Verdichter verbindbar sind. Zusätzlich können der dritte Wärmetauscher und der vierte Wärmetauscher wahlweise mit einer weiteren Arbeitsmaschine verbindbar sein.

Eine weitere Ausbaustufe der Erfindung sieht vor, dass der dritte Hochdruckbehälter neben dem dritten Wärmetauscher einen siebenten Wärmetauscher aufweist, und dass der vierte Hochdruckbehälter neben dem vierten Wärmetauscher einen achten Wärmetauscher aufweist, wobei insbesondere der siebente Wärmetauscher und der achte Wärmetauscher in einem Hochdruckwärmeträgerkreislauf mit dem Verdichter und mit einer Arbeitsmaschine verbindbar sind. Auf diese Weise wird eine bisher unerreichte Variabilität im Hinblick auf die Ausnutzung verschiedenster Umgebungsbedingungen erzielt. Kurzfristige Perioden, in denen die Energienachfrage das Angebot übersteigt können bevorzugterweise dadurch überbrückt werden, dass zusätzlich Hochdruckpufferspeicher vorgesehen sind.

Weiters betrifft die vorliegende Erfindung ein Verfahren zur Umwandlung thermischer Energie in mechanische Arbeit, bei dem durch einen ersten Umgebungswärmetauscher Wärme auf einem ersten Temperaturniveau von der Umgebung aufgenommen wird und an ein unter Hochdruck stehendes Arbeitsmedium abgegeben wird, das in einem Hochdruckbehälter vorliegt, und bei dem ein zweiter Umgebungswärmetauscher Wärme auf einem zweiten Temperaturniveau mit der Umgebung austauscht, wobei das unter Hochdruck stehende Arbeitsmedium in einer Arbeitsmaschine entspannt wird.

Erfindungsgemäß ist dieses Verfahren dadurch gekennzeichnet, dass ein erster Hochdruckbehälter abwechselnd thermisch mit dem ersten Umgebungswärmetauscher und mit dem zweiten Umgebungswärmetauscher in Verbindung gebracht wird. Durch kurze Zykluszeiten können hohe Wirkungsrade erreicht werden.

Eine begünstigte Variante des erfindungsgemäßen Verfahrens sieht vor, dass ein zweiter Hochdruckbehälter abwechselnd thermisch mit dem ersten Umgebungswärmetauscher und mit dem zweiten Umgebungswärmetauscher in Verbindung gebracht wird, so dass jeweils der erste Hochdruckbehälter mit einem Umgebungswärmetauscher und der zweite Hochdruckbehälter mit dem anderen Umgebungswärmetauscher thermisch in Verbindung steht.

Das Verfahren wird dabei insbesondere so geführt, dass abwechselnd in einem ersten Arbeitstakt das Arbeitsmedium in dem ersten Hochdruckbehälter über einen ersten Wärmetauscher erwärmt wird, indem der erste Wärmetauscher mit dem ersten Umgebungswärmetauscher in Verbindung gebracht wird, während gleichzeitig der zweite Hochdruckbehälter über einen sechsten Wärmetauscher gekühlt wird, indem der sechste Wärmetauscher mit dem zweiten Umgebungswärmetauscher in Verbindung gebracht wird, und in einem zweiten Arbeitstakt das Arbeitsmedium in dem zweiten Hochdruckbehälter über einen zweiten Wärmetauscher erwärmt wird, indem der zweite Wärmetauscher mit dem ersten Umgebungswärmetauscher in Verbindung gebracht wird, während gleichzeitig der erste Hochdruckbehälter über einen fünften Wärmetauscher gekühlt wird, indem der fünfte Wärmetauscher mit dem zweiten Umgebungswärmetauscher in Verbindung gebracht wird.

In der Folge wird die Erfindung anhand der in den Figuren dargestellten Ausführungsvarianten näher erläutert. Es zeigen:
- Fig. 1: ein schematisches Schaltungsdiagramm, das das Grundkonzept der Erfindung erklärt;
- Fig. 2: eine Variante der Schaltung von Fig. 1; und
- Fig. 3: eine bevorzugte Ausführungsform der Erfindung in einem Schaltungsdiagramm.

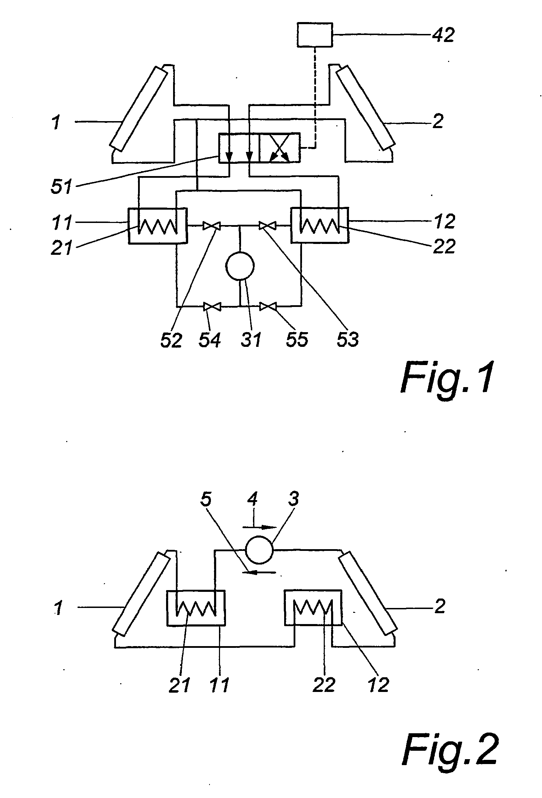

Fig. 1 zeigt schematisch das Grundkonzept der vorliegenden Erfindung. Ein erster Umgebungswärmetauscher 1 ist beispielsweise als Solarkollektor ausgebildet. Ein zweiter Umgebungswärmetauscher 2 ist ein Erdkollektor, wobei es für die vorliegende Erfindung bedeutungslos ist, ob es sich dabei um einen Tiefenkollektor handelt, der in einem Bohrloch bis in eine Tiefe von 100 m oder mehr angeordnet ist, oder um einen Flachkollektor, der in einer Tiefe von etwa 1 m bis 2 m großflächig im Erdreich vergraben ist. Räumlich von den Umgebungswärmetauschern 1, 2 getrennt sind ein erster Hochdruckbehälter 11 und ein zweiter Hochdruckbehälter 12 vorgesehen, die einen ersten Wärmetauscher 21 bzw. einen zweiten Wärmetauscher 22 aufweisen. Über ein Mehrwegeventil 51 wird erreicht, dass der erster Umgebungswärmetauscher 1 wahlweise mit dem ersten Wärmetauscher 21 oder dem zweiten Wärmetauscher 22 verbunden ist. Gleichzeitig wird der zweite Umgebungswärmetauscher 2 mit dem jeweils anderem Wärmetauscher 22, 21 verbunden. Nicht dargestellte Umwälzpumpen sorgen für den Transport eines Arbeitsmediums in den Wärmeträgerkreisläufen des ersten bzw. zweiten Umgebungswärmetauschers 1, 2. Eine Steuerungseinrichtung 42 sorgt für die jeweils optimale Umschaltung des Mehrwegeventils 51. Durch die Erwärmung eines der Hochdruckbehälter 11, 12 durch den jeweiligen Wärmetauscher 21, 22 steigt der Innendruck in diesem Hochdruckbehälter 11, 12 an, so dass sich ein Druckunterschied zum anderen Hochdruckbehälter 12, 11 ergibt. Dieser Druckunterschied kann durch eine Arbeitsmaschine 31, die beispielsweise als Turbine ausgebildet ist, in mechanische Arbeit umgewandelt werden. Nach Erreichen eines Druckausgleichs wird das Mehrwegeventil 51 umgesteuert, so dass nunmehr der andere Hochdruckbehälter 12, 11 erwärmt wird und die Entspannung durch die Arbeitsmaschine 31 in umgekehrter Richtung erfolgt. Die Arbeitsmaschine 31 kann dabei umsteuerbar ausgebildet sein, oder es werden Ventile 52, 53, 54, 55 verwendet, um die erforderliche Führung des Arbeitsmediums zwischen den Hochdruckbehältern 11, 12 und der Arbeitsmaschine 31 sicherzustellen.

Bei der Ausführungsvariante von Fig. 2 ist ein Kühlmittelkreislauf so angeordnet, dass hintereinander der erste Umgebungswärmetauscher 1, der erste Wärmetauscher 21, der zweite Umgebungswärmetauscher 2 und der zweite Wärmetauscher 22 in einem geschlossenen Kreislauf geschaltet sind. Eine umsteuerbare Umwälzpumpe 3 ist in der Lage, das Arbeitsmedium dieses Kreislaufs wahlweise in jede der beiden Richtungen zu pumpen. Wird die Umwälzpumpe 3 in Richtung des Pfeils 4 angetrieben, so wird die Wärme aus dem Umgebungswärmetauscher 2 über den ersten Wärmetauscher 21 zur Erwärmung des ersten Hochdruckbehälters 11 verwendet, wonach das Arbeitsmedium in den kälteren Umgebungswärmetauscher 2 strömt und danach über den zweiten Wärmetauscher 22 den zweiten Hochdruckbehälter 12 kühlt. Wird die Umwälzpumpe 3 umgesteuert, um das Arbeitsmedium im Sinn des Pfeils 5 zu fördern, so erwärmt das Arbeitsmedium, das aus dem ersten Umgebungswärmetauscher 1 ausströmt, über den zweiten Wärmetauscher 22 den zweiten Hochdruckbehälter 12 und durchströmt danach den zweiten Umgebungswärmetauscher 2 und kühlt danach über den ersten Wärmetauscher 21 den ersten Hochdruckbehälter 11. Die übrige Schaltung entspricht weitgehend der der Fig. 1. Bei dieser Ausführungsvariante ist es möglich, ohne besondere Ventile zwischen Heizung und Kühlung der beiden Hochdruckbehälter 11, 12 umzuschalten.

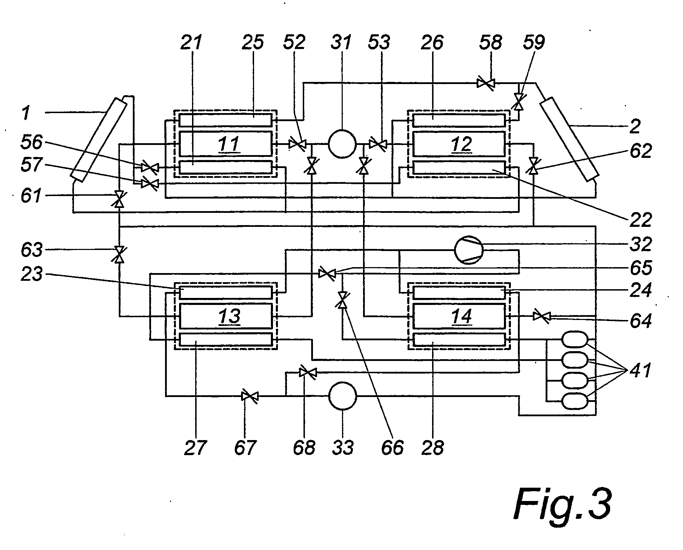

Es wird hiermit festgehalten, dass Fig. 1, Fig. 2 nur schematisch die grundsätzliche Funktionsweise der vorliegenden Erfindung zeigen. Abwandlungen sind in vielfältiger Weise möglich. So ist es beispielsweise möglich, mehr als zwei Hochdruckbehälter 11, 12 vorzusehen und diese nach einem vorbestimmten Schaltzyklus mit den Umgebungswärmetauschern 1, 2 in Verbindung zu bringen und dadurch zu erwärmen oder abzukühlen. Weitere Abwandlungen der Erfindung sind in Fig. 3 dargestellt.

Bei der Ausführungsvariante von Fig. 3 ist der erste Hochdruckbehälter 11 mit einem ersten Wärmetauscher 21 und einem fünften Wärmetauscher 25 versehen. Der zweite Hochdruckbehälter 12 ist mit einem zweiten Wärmetauscher 22 und einem sechsten Wärmetauscher 26 ausgerüstet. Der erste Umgebungswärmetauscher 1 ist über Ventile 56, 57 wahlweise mit dem ersten Wärmetauscher 21 und dem zweiten Wärmetauscher 22 verbindbar. Gleichzeitig ist der zweite Umgebungswärmetauscher 2 über Ventile 58, 59 wahlweise mit dem fünften Wärmetauscher 25 und dem sechsten Wärmetauscher 26 verbindbar. Die Arbeitsmaschine 31 steht über Ventile 52, 53 mit dem ersten Hochdruckbehälter 11 und dem zweiten Hochdruckbehälter 12 in Verbindung. Durch die abwechselnde Erwärmung und Abkühlung der beiden Hochdruckbehälter 11, 12 kann die Arbeitsmaschine 31 angetrieben werden, indem das Arbeitsmedium von dem Hochdruckbehälter 11, 12 mit höherem Druck in den anderen Hochdruckbehälter 12, 11 mit niedrigerem Druck entspannt wird. Der Druck des Arbeitsmediums bewegt sich dabei in der Größenordnung von etwa 200 bar, kann aber bis zu 300 bar und mehr betragen.

Der erste und der zweite Hochdruckbehälter 11, 12 stehen über Hochdruckleitungen mit Ventilen 61, 62, 63, 64 mit einem dritten Hochdruckbehälter 13 und einem vierten Hochdruckbehälter 14 in Verbindung. Der dritte Hochdruckbehälter 13 besitzt dabei einen dritten Wärmetauscher 23 und einen siebenten Wärmetauscher 27, während der vierte Hochdruckbehälter 14 einen vierten Hochdruckbehälter 24 und einen achten Wärmetauscher 28 aufweist. Der dritte, der vierte, der siebente und der achte Wärmetauscher 23, 24, 27, 28 stehen über Ventile 65, 66 mit einem Verdichter 32 in Verbindung, der von der Arbeitsmaschine 31 angetrieben wird.

Mehrere Hochdruckpufferspeicher 41 stehen über die Ventile 61, 62, 63, 64 mit den Hochdruckbehältern 11, 12, 13, 14 in Verbindung und sind im Weiteren mit dem siebenten und dem achten Wärmetauscher 27, 28 gekoppelt. Daneben ist der Hochdruckkreislauf mit dem siebenten und dem achten Wärmetauscher 27, 28 mit einer weiteren Arbeitsmaschine 33 in Verbindung, die an ihrer stromabwärtigen Seite über Ventile 67, 68 mit dem dritten und dem vierten Wärmetauscher 23, 24 in Verbindung steht.

In der Folge wird die Arbeitsweise der erfindungsgemäßem Vorrichtung erläutert.

Anfänglich sind die Hochdruckbehälter 11, 12 mit einem Arbeitsmedium mit einem gleichen Druck von beispielsweise 200 bar gefüllt. Das Arbeitsmedium kann Luft sein, es kann sich aber auch um ein passendes anderes Gas handeln. Es wird nun angenommen, dass durch Sonneneinstrahlung auf den ersten Umgebungswärmetauscher 1 oder durch sonstige Erwärmung die Temperatur in diesem Umgebungswärmetauscher 1 ansteigt, während die Temperatur im Umgebungswärmetauscher 2 gering ist, da dieser im Schatten, innerhalb eines Gebäudes oder im Erdreich angeordnet ist. In einem ersten Arbeitszyklus sind die Ventile 56 und 59 geöffnet und die Ventile 57 und 58 geschlossen. Daher wird der erste Hochdruckbehälter 11 über den ersten Wärmetauscher 21 erwärmt, während der zweite Hochdruckbehälter 12 über den sechsten Wärmetauscher 26 gekühlt wird. Der durch die Temperaturerhöhung angestiegene Druck im ersten Hochdruckbehälter 11 wird über die Arbeitsmaschine 31 abgearbeitet, und es wird Arbeitsmedium dem zweiten Hochdruckbehälter 12 zugeführt. Die Arbeitsmaschine 31 ist mechanisch mit dem Verdichter 32 gekoppelt, der das Arbeitsmedium auf Hochdruck verdichtet und zunächst durch den siebenten und/oder achten Wärmetauscher 27, 28 führt, wo die Kompressionswärme an den dritten und/oder vierten Hochdruckbehälter 13, 14 abgegeben wird. In den Hochdruckpufferspeichern 41 wird Arbeitsmedium unter hohem Druck gespeichert.

Der Wechsel zwischen der Erwärmung des ersten und des zweiten Hochdruckbehälters 11, 12 ist oben bereits ausführlich beschrieben worden. Nach mehreren Zyklen ist die Temperatur und damit der Druck in dem dritten und/oder dem vierten Hochdruckbehälter 13, 14 so weit angestiegen, dass das Arbeitsmedium über die weitere Arbeitsmaschine 33 entspannt und abgearbeitet werden kann. Das entspannte und kühle Arbeitsmedium wird durch den dritten und/oder den vierten Wärmetauscher 23, 24 durchgeleitet und kühlt den betreffenden Hochdruckbehälter 13, 14 ab. Bei entsprechender Steuerung kann dabei Kälte erzeugt werden, die zur Kühlung von Gebäuden oder Anlagen verwendet werden kann.

Die vorliegende Erfindung ermöglicht es, Wärmeenergie mit hohem Wirkungsgrad und äußerst flexibel in mechanische Arbeit umzuwandeln.

## Patentansprüche

1. Wärmekraftmaschine mit einem ersten Umgebungswärmetauscher (1) zum Wärmeaustausch mit der Umgebung auf einem ersten Temperaturniveau, einem zweiten Umgebungswärmetauscher (2) zum Wärmeaustausch mit der Umgebung auf einem zweiten Temperaturniveau, einem ersten Hochdruckbehälter (11) zur Aufnahme eines Arbeitsmediums unter hohem Druck, einem zweiten Hochdruckbehälter (12) zur Aufnahme eines Arbeitsmediums unter hohem Druck, einer Arbeitsmaschine (31) zur Gewinnung mechanischer Arbeit aus der Entspannung des Arbeitsmediums aus einem der Hochdruckbehälter (11, 12), und mit einer Steuerungseinrichtung (42) zur Steuerung des Verfahrensablaufs, **dadurch gekennzeichnet, dass** der erste Hochdruckbehälter (11) einen ersten Wärmetauscher (21) aufweist, der räumlich getrennt von den Umgebungswärmetauschern (1, 2) ist und der mit dem ersten Umgebungswärmetauscher (1) verbindbar ist, und dass der zweite Hochdruckbehälter (12) einen zweiten Wärmetauscher (22) aufweist, der räumlich getrennt von den Umgebungswärmetauschern (1, 2) ist und der mit dem zweiten Umgebungswärmetauscher (2) verbindbar ist und dass ein mechanisch mit der Arbeitsmaschine (31) gekoppelter Verdichter (32) vorgesehen ist.

2. Wärmekraftmaschine nach Anspruch 1, **dadurch gekennzeichnet, dass** die Arbeitsmaschine (31) als Turbine ausgebildet ist.

3. Wärmekraftmaschine nach Anspruch 1 oder 2, **dadurch gekennzeichnet, dass** der Verdichter (32) als Hochdruckkompressor ausgebildet ist.

4. Wärmekraftmaschine nach einem der Ansprüche 1 bis 3, **dadurch gekennzeichnet, dass** der erste Umgebungswärmetauscher (1) in einem geschlossenen Wärmeträgerkreislauf mit ersten Wärmetauscher (21) und/oder dem zweiten Wärmetauscher (22) verbunden ist.

5. Wärmekraftmaschine nach einem der Ansprüche 1 bis 4, **dadurch gekennzeichnet, dass** der zweite Umgebungswärmetauscher (2) in einem geschlossenen Wärmeträgerkreislauf mit ersten Wärmetauscher (21) und/oder dem zweiten Wärmetauscher (22) verbunden ist.

6. Wärmekraftmaschine nach einem der Ansprüche 1 bis 5, **dadurch gekennzeichnet, dass** die Arbeitsmaschine (31) umsteuerbar ist.

7. Wärmekraftmaschine nach einem der Ansprüche 1 bis 6, **dadurch gekennzeichnet, dass** der erste Hochdruckbehälter (11) neben dem ersten Wärmetauscher (21) einen fünften Wärmetauscher (25) aufweist, und dass der zweite Hochdruckbehälter (12) neben dem zweiten Wärmetauscher (22) einen sechsten Wärmetauscher (26) aufweist.

8. Wärmekraftmaschine nach Anspruch 7, **dadurch gekennzeichnet, dass** der erste Umgebungswärmetauscher (1) wahlweise mit dem fünften und dem sechsten Wärmetauscher (25, 26) verbindbar ist und dass der zweite Umgebungswärmetauscher (2) wahlweise mit dem ersten und dem zweiten Wärmetauscher (21, 22) verbindbar ist.

9. Wärmekraftmaschine nach Anspruch 8, **dadurch gekennzeichnet, dass** der erste Umgebungswärmetauscher (1) mit dem fünften und dem sechsten Wärmetauscher (25, 26) in einem geschlossenen Wärmeträgerkreislauf angeordnet ist und dass der zweite Umgebungswärmetauscher (2) mit dem ersten und dem zweiten Wärmetauscher (21, 22) in einem weiteren geschlossenen Wärmeträgerkreislauf angeordnet ist.

10. Wärmekraftmaschine nach einem der Ansprüche 1 bis 9, **dadurch gekennzeichnet, dass** der erste Umgebungswärmetauscher (1) oder der zweite Umgebungswärmetauscher (2) als Solarkollektor ausgebildet ist.

11. Wärmekraftmaschine nach einem der Ansprüche 1 bis 10, **dadurch gekennzeichnet, dass** der erste Umgebungswärmetauscher (1) oder der zweite Umgebungswärmetauscher (2) als Erdwärmetauscher ausgebildet ist.

12. Wärmekraftmaschine nach einem der Ansprüche 1 bis 11, **dadurch gekennzeichnet, dass** der erste Umgebungswärmetauscher (1) oder der zweite Umgebungswärmetauscher (2) als Wärmetauscher zur Beheizung und/oder Kühlung von Räumlichkeiten oder Anlagen ausgebildet ist.

13. Wärmekraftmaschine nach einem der Ansprüche 1 bis 12, **dadurch gekennzeichnet, dass** im weiteren ein dritter Hochdruckbehälter (13) und ein vierter Hochdruckbehälter (14) vorgesehen sind, die wahlweise mit der Arbeitsmaschine (31) verbindbar sind.

14. Wärmekraftmaschine nach Anspruch 13, **dadurch gekennzeichnet, dass** der dritte und/ oder der vierte Hochdruckbehälter (13, 14) gegenüber der Umgebung isoliert sind.

15. Wärmekraftmaschine nach Anspruch 13 oder 14, **dadurch gekennzeichnet, dass** der dritte Hochdruckbehälter (13) einen dritten Wärmetauscher (23) aufweist und dass der vierte Hochdruckbehälter (14) einen vierten Wärmetauscher (24) aufweist.

16. Wärmekraftmaschine nach Anspruch 15, **dadurch gekennzeichnet, dass** der dritte Wärmetauscher (23) und der vierte Wärmetauscher (24) wahlweise mit dem Verdichter (32) verbindbar sind.

17. Wärmekraftmaschine nach Anspruch 15 oder 16, **dadurch gekennzeichnet, dass** der dritte Wärmetauscher (23) und der vierte Wärmetauscher (24) wahlweise mit einer weiteren Arbeitsmaschine (33) verbindbar sind.

18. Wärmekraftmaschine nach einem der Ansprüche 13 bis 17, **dadurch gekennzeichnet, dass** der dritte Hochdruckbehälter (13) neben dem dritten Wärmetauscher (23) einen siebenten Wärmetauscher (27) aufweist, und dass der vierte Hochdruckbehälter (14) neben dem vierten Wärmetauscher (24) einen achten Wärmetauscher (28) aufweist.

19. Wärmekraftmaschine nach Anspruch 18, **dadurch gekennzeichnet, dass** der siebente Wärmetauscher (27) und der achte Wärmetauscher (28) in einem Hochdruckwärmeträgerkreislauf mit dem Verdichter (32) und mit einer Arbeitsmaschine (31, 33) verbindbar sind.

20. Wärmekraftmaschine nach einem der Ansprüche 1 bis 19, **dadurch gekennzeichnet, dass** zusätzlich Hochdruckpufferspeicher (41) vorgesehen sind.

21. Verfahren zur Umwandlung thermischer Energie in mechanische Arbeit, bei dem durch einen ersten Umgebungswärmetauscher (1) Wärme auf einem ersten Temperaturniveau von der Umgebung aufgenommen wird und an ein unter Hochdruck stehendes Arbeitsmedium abgegeben wird, das in einem Hochdruckbehälter (11, 12) vorliegt, und bei dem ein zweiter Umgebungswärmetauscher (2) Wärme auf einem zweiten Temperaturniveau mit der Umgebung austauscht, wobei das unter Hochdruck stehende Arbeitsmedium in einer Arbeitsmaschine (31) entspannt wird, **dadurch gekennzeichnet, dass** ein erster Hochdruckbehälter (11) abwechselnd thermisch mit dem ersten Umgebungswärmetauscher (1) und mit dem zweiten Umgebungswärmetauscher (2) in Verbindung gebracht wird und dass durch die Arbeitsmaschine (31) ein Verdichter (32) angetrieben wird, der das Arbeitsmedium bzw. ein weiteres Arbeitsmedium verdichtet.

22. Verfahren nach Anspruch 21, **dadurch gekennzeichnet, dass** ein zweiter Hochdruckbehälter (12) abwechselnd thermisch mit dem ersten Umgebungswärmetauscher (1) und mit dem zweiten Umgebungswärmetauscher (2) in Verbindung gebracht wird, so dass jeweils der erste Hochdruckbehälter (11) mit einem Umgebungswärmetauscher (1, 2) und der zweite Hochdruckbehälter (12) mit dem anderen Umgebungswärmetauscher (2, 1) thermisch in Verbindung steht.

23. Verfahren nach Anspruch 21 oder 22, **dadurch gekennzeichnet, dass** das Arbeitsmedium in dem ersten Hochdruckbehälter (11) über einen ersten Wärmetauscher (21) erwärmt und gekühlt wird, indem der erste Wärmetauscher (21) abwechselnd mit dem ersten Umgebungswärmetauscher (1) und mit dem zweiten Umgebungswärmetauscher (2) in Verbindung gebracht wird.

24. Verfahren nach einem der Ansprüche 21 bis 23, **dadurch gekennzeichnet, dass** das Arbeitsmedium in dem ersten Hochdruckbehälter (11) über einen ersten Wärmetauscher (21) erwärmt und gekühlt wird, indem der erste Wärmetauscher (21) abwechselnd mit dem ersten Umgebungswärmetauscher (1) und mit dem zweiten Umgebungswärmetauscher (2) in Verbindung gebracht wird.

25. Verfahren nach einem der Ansprüche 21 bis 24, **dadurch gekennzeichnet, dass** abwechselnd in einem ersten Arbeitstakt das Arbeitsmedium in dem ersten Hochdruckbehälter (11) über einen ersten Wärmetauscher (21) erwärmt wird, indem der erste Wärmetauscher (21) mit dem ersten Umgebungswärmetauscher (1) in Verbindung gebracht wird, während gleichzeitig der zweite Hochdruckbehälter (12) über einen sechsten Wärmetauscher (26) gekühlt wird, indem der sechste Wärmetauscher (26) mit dem zweiten Umgebungswärmetauscher (2) in Verbindung gebracht wird, und in einem zweiten Arbeitstakt das Arbeitsmedium in dem zweiten Hochdruckbehälter (12) über einen zweiten Wärmetauscher (22) erwärmt wird, indem der zweite Wärmetauscher (22) mit dem ersten Umgebungswärmetauscher (1) in Verbindung gebracht wird, während gleichzeitig der erste Hochdruckbehälter (11) über einen fünften Wärmetauscher (25) gekühlt wird, indem der fünfte Wärmetauscher (25) mit dem zweiten Umgebungswärmetauscher (2) in Verbindung gebracht wird.

26. Verfahren nach einem der Ansprüche 1 bis 25, **dadurch gekennzeichnet, dass** der Verdichter (32) ein Arbeitsmedium erwärmt, das die Wärme abwechselnd über einen dritten und einen vierten Wärmetauscher (23, 24) an ein Arbeitsmedium abgibt, das in einem dritten bzw. vierten Hochdruckbehälter (13, 14) vorliegt.

27. Verfahren nach einem der Ansprüche 21 bis 26, **dadurch gekennzeichnet, dass** das Arbeitsmedium aus dem ersten und dem zweiten Hochdruckbehälter (11, 12) und gegebenenfalls aus dem dritten und dem vierten Hochdruckbehälter (13, 14) in einer weiteren Arbeitsmaschine entspannt wird.

28. Verfahren nach einem der Ansprüche 21 bis 27, **dadurch gekennzeichnet, dass** unter Hochdruck stehendes Arbeitsmedium in weiteren Hochdruckpufferspeichern (41) gespeichert wird.

29. Verfahren nach Anspruch 28, **dadurch gekennzeichnet, dass** als Arbeitsmedium Druckluft verwendet wird, die zum Antrieb von weiteren Arbeitsmaschinen, wie etwa Pumpen, Generatoren, Kraftfahrzeugen oder dgl. verwendet wird.

30. Verfahren nach einem der Ansprüche 21 bis 29, **dadurch gekennzeichnet, dass** die abwechselnde Beaufschlagung der Wärmetauscher (21, 22) durch Umsteuerung einer Förderpumpe (3) erfolgt.

31. Verfahren nach einem der Ansprüche 21 bis 30, **dadurch gekennzeichnet, dass** die bei der Verdichtung entstehende Wärme zur Beheizung von Gebäuden oder Anlagen eingesetzt wird.

32. Verfahren nach einem der Ansprüche 21 bis 31, **dadurch gekennzeichnet, dass** die bei der Entspannung entstehende Kälte zur Kühlung von Gebäuden oder Anlagen eingesetzt wird.

## Claims

1. A heat engine with a first ambient heat exchanger (1) for exchanging heat with the ambient environment at a first temperature level, a second ambient heat exchanger (2) for exchanging heat with the ambient environment at a second temperature level, a first high-pressure tank (11) for receiving a working medium under high pressure, a second high-pressure tank (12) for receiving a working medium under a high pressure, a working machine (31) for gaining mechanical work from the expansion of the working medium from a high-pressure tank (11, 12), and with a control device (42) for controlling the process, **characterized in that** the first high-pressure tank (11) comprises a first heat exchanger (21) which is spatially separated from the ambient heat exchangers (1, 2) and can be connected with the first ambient heat exchanger (1), and that the second high-pressure tank (12) comprises a second heat exchanger (22) which is spatially separated from the ambient heat exchangers (1, 2) and can be connected with the second heat exchanger (2), and that a compressor (32) is provided which is mechanically coupled with the working machine (31).

2. A heat engine according to claim 1, **characterized in that** the working machine (31) is arranged as a turbine.

3. A heat engine according to claim 1 or 2, **characterized in that** the compressor (32) is arranged as a high-pressure compressor.

4. A heat engine according to one of the claims 1 to 3, **characterized in that** the first ambient heat exchanger (1) is connected in a closed heat carrier cycle with the first heat exchanger (21) and/or the second heat exchanger (22).

5. A heat engine according to one of the claims 1 to 4, **characterized in that** the second ambient heat exchanger (2) is connected in a closed heat carrier cycle with the first heat exchanger (21) and/or the second heat exchanger (22).

6. A heat engine according to one of the claims 1 to 5, **characterized in that** the working machine (31) is reversible.

7. A heat engine according to one of the claims 1 to 6, **characterized in that** the first high-pressure tank (11) comprises a fifth heat exchanger (25) in addition to the first heat exchanger (21), and that the second high-pressure tank (12) comprises a sixth heat exchanger (26) in addition to the second heat exchanger (22).

8. A heat engine according to claim 7, **characterized in that** the first ambient heat exchanger (1) is optionally connectable with the fifth and sixth heat exchanger (25, 26) and that the second ambient heat exchanger (2) is optionally connectable with the first and second heat exchanger (21, 22).

9. A heat engine according to claim 8, **characterized in that** the first ambient heat exchanger (1) with the fifth and sixth heat exchanger (25, 26) is arranged in a closed heat carrier cycle and that the second ambient heat exchanger (2) with the first and second heat exchanger (21, 22) is arranged in a further closed heat carrier cycle.

10. A heat engine according to one of the claims 1 to 9, **characterized in that** the first ambient heat exchanger (1) or the second ambient heat exchanger (2) is arranged as a solar collector.

11. A heat engine according to one of the claims 1 to 10, **characterized in that** the first ambient heat exchanger (1) or the second ambient heat exchanger (2) is arranged as an earth-to-air exchanger.

12. A heat engine according to one of the claims 1 to 11, **characterized in that** the first ambient heat exchanger (1) or the second ambient heat exchanger (2) is arranged as a heat exchanger for heating and/or cooling rooms or installations.

13. A heat engine according to one of the claims 1 to 12, **characterized in that** a third high-pressure tank (13) and a fourth high-pressure tank (14) are further provided which are optionally connectable with the working machine (31).

14. A heat engine according to claim 13, **characterized in that** the third and/or fourth high-pressure tank (13, 14) are insulated against the ambient environment.

15. A heat engine according to claim 13 or 14, **characterized in that** the third high-pressure tank (13) comprises a third heat exchanger (23) and that the fourth high-pressure tank (14) comprises a fourth heat exchanger (24).

16. A heat engine according to claim 15, **characterized in that** the third heat exchanger (23) and the fourth heat exchanger (24) are optionally connectable with the compressor (32).

17. A heat engine according to claim 15 or 16, **characterized in that** the third heat exchanger (23) and the fourth heat exchanger (24) are optionally connectable with a further working machine (33).

18. A heat engine according to one of the claims 13 to 17, **characterized in that** the third high-pressure tank (13) comprises a seventh heat exchanger (27) in addition to the third heat exchanger (23) and that the fourth high-pressure tank (14) comprises an eighth heat exchanger (28) in addition to the fourth heat exchanger (24).

19. A heat engine according to claim 18, **characterized in that** the seventh heat exchanger (27) and the eighth heat exchanger (28) are connectable in a high-pressure heat carrier cycle with the compressor (32) and with a working machine (31, 33).

20. A heat engine according to one of the claims 1 to 19, **characterized in that** high-pressure buffer storage units (41) are additionally provided.

21. A method for converting thermal energy into mechanical work in which heat is absorbed from the ambient environment at a first temperature level by a first ambient heat exchanger (1) and is conveyed to a working medium under high pressure present in a high-pressure tank (11, 12), and in which a second ambient heat exchanger (2) exchanges heat at a second temperature level with the ambient environment, with the working medium under high pressure being expanded in a working machine (31), **characterized in that** a first high-pressure tank (11) is brought into thermal connection in an alternating manner with the first ambient heat exchanger (1) and the second ambient heat exchanger (2), and that a compressor (32) is driven by the working machine (31) which compresses the working medium or a further working medium.

22. A method according to claim 21, **characterized in that** a second high-pressure tank (12) is brought into connection thermally in an alternating manner with the first ambient heat exchanger (1) and with the second ambient heat exchanger (2), so that the first high-pressure tank (11) is thermally in connection with an ambient heat exchanger (1, 2) and the second high-pressure tank (12) is thermally in connection with the other ambient heat exchanger (2, 1).

23. A method according to claim 21 or 22, **characterized in that** the working medium in the first high-pressure tank (11) is heated and cooled via a first heat exchanger (21), such that the first heat exchanger (21) is brought into connection in an alternating manner with the first ambient heat exchanger (1) and with the second ambient heat exchanger (2).

24. A method according to one of the claims 21 to 23, **characterized in that** the working medium is heated and cooled in the first high-pressure tank (11) via a first heat exchanger (21), such that the first heat exchanger (21) is brought into connection in an alternating manner with the first ambient heat exchanger (1) and with the second ambient heat exchanger (2).

25. A method according to one of the claims 21 to 24, **characterized in that** in a first working cycle the working medium is heated in the first high-pressure tank (11) via a first heat exchanger (21) in an alternating manner, such that the first heat exchanger (21) is brought into connection with the first ambient heat exchanger (1), whereas simultaneously the second high-pressure tank (12) is cooled via a sixth heat exchanger (26), such that the sixth heat exchanger (26) is brought into connection with the second ambient heat exchanger (2), and in a second work cycle the working medium in the second high-pressure tank (12) is heated via a second heat exchanger (22), such that the second heat exchanger (22) is brought into connection with the first ambient heat exchanger (1), whereas simultaneously the first high-pressure tank (11) is cooled via a fifth heat exchanger (25), such that the fifth heat exchanger (25) is brought into connection with the second ambient heat exchanger (2).

26. A method according to one of the claims 1 to 25, **characterized in that** the compressor (32) heats a working medium which conveys the heat in an alternating manner via a third and a fourth heat exchanger (23, 24) to a working medium which is present in a third or fourth high-pressure tank (13, 14).

27. A method according to one of the claims 21 to 26, **characterized in that** the working medium from the first and second high-pressure tank (11, 12) and optionally from the third and fourth high-pressure tank (13, 14) is expanded in a further working machine.

28. A method according to one of the claims 21 to 27, **characterized in that** the working medium under high pressure is stored in further high-pressure buffer storage units (41).

29. A method according to claim 28, **characterized in that** compressed air is used as a working medium, which is used for driving further working machines such as pumps, generators, motor vehicles or the like.

30. A method according to one of the claims 21 to 29, **characterized in that** the alternating delivery of the heat exchangers (21, 22) is performed by reversing a conveyor pump (3).

31. A method according to one of the claims 21 to 30, **characterized in that** the heat produced during the compression is used for heating buildings or installations.

32. A method according to one of the claims 21 to 31, **characterized in that** the refrigeration produced during the expansion is used for cooling buildings or installations.

## Revendications

1. Machine thermique, comprenant un premier échangeur de chaleur ambiante (1) pour un échange thermique avec l'environnement à un premier niveau de température, un deuxième échangeur de chaleur ambiante (2) pour un échange de chaleur avec l'environnement à un deuxième niveau de température, un premier récipient haute pression (11) pour recevoir un fluide de travail sous haute pression, un deuxième récipient haute pression (12) pour recevoir un fluide de travail sous haute pression, une machine de travail (31) pour obtenir un travail mécanique à partir de la détente du fluide de travail venant d'un récipient à haute pression (11, 12), et avec un dispositif de commande (41) pour commander le déroulement du procédé, **caractérisée en ce que** le premier récipient haute pression (11) présente un premier échangeur de chaleur (21), séparé spatialement des échangeurs de chaleur ambiante (1, 2) et susceptible d'être relié au premier échangeur de chaleur ambiante (1), et **en ce que** le deuxième récipient haute pression (12) présente un deuxième échangeur de chaleur (22), séparé spatialement des échangeurs de chaleur ambiante (1, 2) et susceptible d'être relié au deuxième échangeur de chaleur ambiante (2), et **en ce qu'**un compresseur (32), couplé mécaniquement à la machine de travail (31) est prévu.

2. Machine thermique selon la revendication 1, **caractérisée en ce que** la machine de travail (31) est réalisé sous la forme de turbine.

3. Machine thermique selon la revendication 1 ou 2, **caractérisée en ce que** le compresseur (32) est réalisé sous la forme de compresseur haute pression.

4. Machine thermique selon l'une des revendications 1 à 3, **caractérisée en ce que** le premier échangeur de chaleur ambiante (1) est relié, en un circuit caloporteur fermé, au premier échangeur de chaleur (21) et/ou au deuxième échangeur de chaleur (22).

5. Machine thermique selon l'une des revendications 1 à 4, **caractérisée en ce que** le deuxième échangeur de chaleur ambiante (2) est relié, en un circuit caloporteur fermé, au premier échangeur de chaleur (21) et/ou au deuxième échangeur de chaleur (22).

6. Machine thermique selon l'une des revendications 1 à 5, **caractérisée en ce que** la machine de travail (31) est susceptible d'être commutée de façon commandée.

7. Machine thermique selon l'une des revendications 1 à 6, **caractérisée en ce que** le premier compresseur haute pression (11) présente, outre le premier échangeur de chaleur (21), un cinquième échangeur de chaleur (25), et **en ce que** le deuxième récipient à haute pression (12) présente, outre le deuxième échangeur de chaleur (22), un sixième échangeur de chaleur (26).

8. Machine thermique selon la revendication 7, **caractérisée en ce que** le premier échangeur de chaleur ambiante (1) est susceptible d'être relié au choix au cinquième et au sixième échangeurs de chaleur (25, 26), et **en ce que** le deuxième échangeur de chaleur ambiante (2) est susceptible d'être relié au choix au premier et au deuxième échangeurs de chaleur (21, 22).

9. Machine thermique selon la revendication 8, **caractérisée en ce que** le premier échangeur de chaleur ambiante (1) est disposé, avec le cinquième et le sixième échangeur de chaleur (25, 26), en un circuit caloporteur fermé, et **en ce que** le deuxième échangeur de chaleur ambiante (2) est disposé avec le premier et le deuxième échangeurs de chaleur (21, 22) en un autre circuit caloporteur fermé.

10. Machine thermique selon l'une des revendications 1 à 9, **caractérisée en ce que** le premier échangeur de chaleur ambiante (1) ou le deuxième échangeur de chaleur ambiante (2) est réalisé sous la forme de collecteur solaire.

11. Machine thermique selon l'une des revendications 1 à 10, **caractérisée en ce que** le premier échangeur de chaleur ambiante (1) ou le deuxième échangeur de chaleur ambiante (2) est réalisé sous la forme d'échangeur géothermique.

12. Machine thermique selon l'une des revendications 1 à 11, **caractérisée en ce que** le premier échangeur de chaleur ambiante (1) ou le deuxième échangeur de chaleur ambiante (2) est réalisé en tant qu'échangeur de chaleur, pour chauffer et/ou refroidir des locaux ou des installations.

13. Machine thermique selon l'une des revendications 1 à 12, **caractérisée en ce qu'**en outre, un troisième récipient à haute pression (13) et un quatrième récipient à haute pression (14) sont prévus, susceptibles d'être reliés au choix à la machine de travail (31).

14. Machine thermique selon la revendication 13, **caractérisée en ce que** le troisième et/ou le quatrième récipients à haute pression (13, 14) est/sont isolé(s) par rapport à l'environnement.

15. Machine thermique selon la revendication 13 ou 14, **caractérisée en ce que** le troisième récipient à haute pression (13) présente un troisième échangeur de chaleur (23), et **en ce que** le quatrième récipient à haute pression (14) présente un quatrième échangeur de chaleur (24).

16. Machine thermique selon la revendication 15, **caractérisée en ce que** le troisième échangeur de chaleur (23) et le quatrième échangeur de chaleur (24) sont susceptibles d'être reliés au choix au compresseur (32).

17. Machine thermique selon la revendication 15 ou 16, **caractérisée en ce que** le troisième échangeur de chaleur (23) et le quatrième échangeur de chaleur (24) sont susceptibles d'être reliés au choix à une autre machine de travail (33).

18. Machine thermique selon l'une des revendications 13 à 17, **caractérisée en ce que** le troisième récipient à haute pression (13) présente, outre le troisième échangeur de chaleur (23), un septième échangeur de chaleur (27), et **en ce que** le quatrième récipient à haute pression (14) présente, outre le quatrième échangeur de chaleur (24), un huitième échangeur de chaleur (28).

19. Machine thermique selon la revendication 18, **caractérisée en ce que** le septième échangeur de chaleur (27) et le huitième échangeur de chaleur (28) sont susceptibles d'être reliés, en un circuit caloporteur haute pression, au compresseur (32) et à une machine de travail (31, 33).

20. Machine thermique selon l'une des revendications 1 à 19, **caractérisée en ce que** des accumulateurs tampon haute pression (41) sont prévus.

21. Procédé de conversion d'énergie thermique en travail mécanique, pour lequel, au moyen d'un premier changeur de chaleur ambiante (1), de la chaleur est captée, à un premier niveau de température, depuis l'environnement, et est délivrée à un fluide de travail placé sous haute pression, se présentant dans un récipient à haute pression (11, 12), et pour lequel un deuxième échangeur de chaleur ambiante (2) échange de la chaleur à un deuxième niveau de température avec l'environnement, le fluide de travail, placé sous haute pression, étant détendu dans une machine de travail (31), **caractérisé en ce qu'**un premier récipient haute pression (11) est relié thermiquement, de façon alternée, au premier échangeur de chaleur ambiante (1) et au deuxième échangeur de chaleur ambiante (2), et **en ce qu'**un compresseur (32), qui comprime le fluide de travail ou un autre fluide de travail, est entraîné par la machine de travail (31).

22. Procédé selon la revendication 21, **caractérisé en ce qu'**un deuxième récipient à haute pression (12) est relié thermiquement de façon alternée au premier échangeur de chaleur ambiante (1) et au deuxième échangeur de chaleur ambiante (2), de manière que, chaque fois, le premier récipient à haute pression (11) soit relié thermiquement à un échangeur de chaleur ambiante (1, 2), et que le deuxième récipient à haute pression (12) soit relié thermiquement à l'autre échangeur de chaleur ambiante (2, 1).

23. Procédé selon la revendication 21 ou 22, **caractérisé en ce que** le fluide de travail est chauffé et refroidi dans le premier récipient à haute pression (11), par l'intermédiaire d'un premier échangeur de chaleur (21), **en ce que** le premier échangeur de chaleur (21) est relié de façon alternée au premier échangeur de chaleur ambiante (1) et au deuxième échangeur de chaleur ambiante (2).

24. Procédé selon l'une des revendications 21 à 23, **caractérisé en ce que** le fluide de travail présentant le premier récipient à haute pression (11) est chauffé et refroidi par un premier échangeur de chaleur (21), **en ce que** le premier échangeur de chaleur (21) est relié de façon alternée au premier échangeur de chaleur ambiante (1) et au deuxième échangeur de chaleur ambiante (2).

25. Procédé selon l'une des revendications 21 à 24, **caractérisé en ce que**, de façon alternée, lors d'un premier cycle de travail, le fluide de travail présent dans le premier récipient à haute pression (11) est chauffé par l'intermédiaire d'un premier échangeur de chaleur (21), **en ce que** le premier échangeur de chaleur (21) est relié au premier échangeur de chaleur ambiante (1), tandis que, simultanément, le deuxième récipient à haute pression (12) est refroidi par un sixième échangeur de chaleur (26), **en ce que** le sixième échangeur de chaleur (26) est relié au deuxième échangeur de chaleur ambiante (2) et, en un deuxième cycle de travail, le fluide de travail présent dans le deuxième récipient à haute pression (12) est chauffé par l'intermédiaire d'un deuxième échangeur de chaleur (22), **en ce que** le deuxième échangeur de chaleur (22) est relié au premier échangeur de chaleur ambiante (1), tandis que, simultanément, le premier récipient à haute pression (11) est refroidi par l'intermédiaire d'un cinquième échangeur de chaleur (25), **en ce que** le cinquième échangeur de chaleur (25) est relié au deuxième échangeur de chaleur ambiante (2).

26. Procédé selon l'une des revendications 1 à 25, **caractérisé en ce que** le compresseur (32) chauffe un fluide de travail qui délivre la chaleur de façon alternée, par l'intermédiaire d'un troisième et d'un quatrième échangeurs de chaleur (23, 24), à un fluide de travail, se trouvant dans un troisième ou un quatrième récipient haute pression (13, 14).

27. Procédé selon l'une des revendications 21 à 26, **caractérisé en ce que** le fluide de travail issu du premier et du deuxième récipients à haute pression (11, 21) et, le cas échéant, issu du troisième et du quatrième récipients à haute pression (13, 14), est détendu dans une autre machine de travail.

28. Procédé selon l'une des revendications 21 à 27, **caractérisé en ce que** le fluide de travail placé sous haute pression est stocké dans d'autres stockages tampon à haute pression (41).

29. Procédé selon la revendication 28, **caractérisé en ce qu'**on utilise comme fluide de travail de l'air comprimé qui est utilisé pour l'entraînement d'autres machines de travail, tel que, par exemple, des pompes, des générateurs, des véhicules automobiles ou analogues.

30. Procédé selon l'une ou plusieurs des revendications 21 à 29, **caractérisé en ce que** la sollicitation alternant des échangeurs de chaleur (21, 22) est effectuée par commande de commutation d'une pompe de transfert (3).

31. Procédé selon l'une des revendications 21 à 30, **caractérisé en ce que** la chaleur produite lors de la compression est utilisée pour chauffer des bâtiments ou des installations.

32. Procédé selon l'une des revendications 21 à 31, **caractérisé en ce que** le froid produit lors de la détente est utilisé pour le refroidissement de bâtiments ou d'installations.
